# EUROPEAN PATENT SPECIFICATION

(11) **EP 2 820 473 B1**
(45) Date of publication and mention of the grant of the patent: **23.10.2019**
(21) Application number: 13711759.4
(22) Date of filing: 28.02.2013
(51) Int. Cl.: G02F 1/155, G02F 1/163

(54) **MULTI-ZONE ELECTROCHROMIC DEVICES**
MEHRZONIGE ELEKTROCHROME VORRICHTUNGEN
DISPOSITIFS ÉLECTROCHROMIQUES MULTIZONES

(30) Priority: 28.02.2012 US 201213407106
(43) Date of publication of application: 07.01.2015
(73) Proprietor: Sage Electrochromics, Inc., Faribault, MN 55021 (US)
(72) Inventor: GREER, Bryan, D., Northfield, MN 55057 (US)
(74) Representative: Zimmermann & Partner Patentanwälte mbB
(86) International application number: PCT/US2013/028283
(87) International publication number: WO 2013/130781

(56) References cited:
- WO-A2-2006/085258
- WO-A2-2009/000547
- WO-A2-2009/158510
- FR-A1- 2 957 159
- US-A- 4 832 468
- US-A1- 2007 133 078
- US-A1- 2011 260 961

## Description

### BACKGROUND OF THE INVENTION

Electrochromic devices include electrochromic materials that are known to change their optical properties, such as coloration, in response to the application of an electrical potential, thereby making the device more or less transparent or more or less reflective. Typical prior art electrochromic devices include a counter electrode layer, an electrochromic material layer which is deposited substantially parallel to the counter electrode layer, and an ionically conductive layer separating the counter electrode layer from the electrochromic layer respectively. In addition, two transparent conductive layers respectively are substantially parallel to and in contact with the counter electrode layer and the electrochromic layer. Materials for making the counter electrode layer, the electrochromic material layer, the ionically conductive layer and the conductive layers are known and described, for example, in U.S. Patent Application No. 2008/0169185, incorporated by reference herein, and desirably are substantially transparent oxides or nitrides. When an electric potential is applied across the layered structure of the electrochromic device, such as by connecting the respective conductive layers to a low voltage electrical source, ions, such as Li+ ions stored in the counter electrode layer, flow from the counter electrode layer, through the ion conductor layer and to the electrochromic layer. In addition, electrons flow from the counter electrode layer, around an external circuit including a low voltage electrical source, to the electrochromic layer so as to maintain charge neutrality in the counter electrode layer and the electrochromic layer. The transfer of ions and electrons to the electrochromic layer causes the optical characteristics of the electrochromic layer, and optionally the counter electrode layer in a complementary EC device, to change, thereby changing the coloration and, thus, the transparency of the electrochromic device.

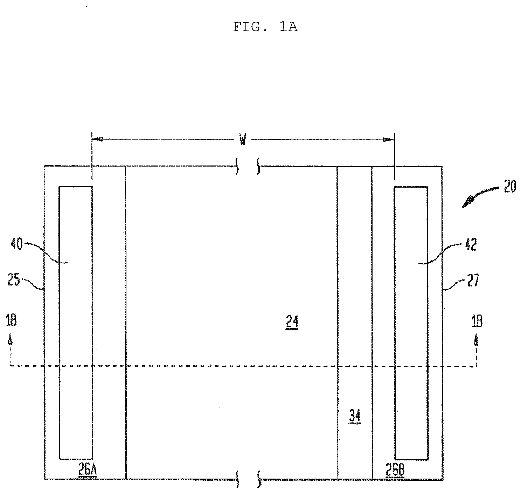

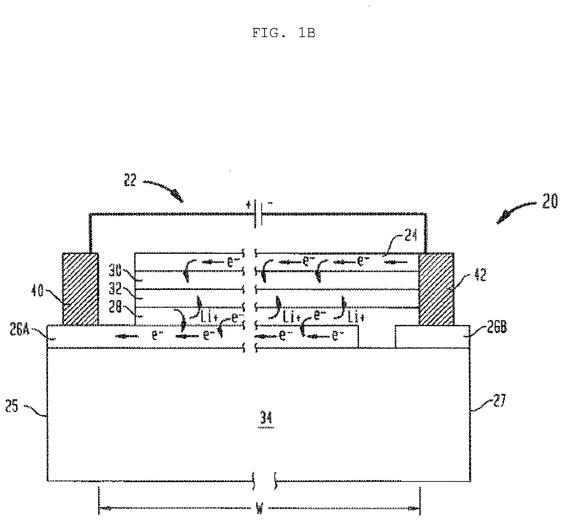

FIGs. 1A and 1B illustrate plan and cross-sectional views, respectively, of a typical prior art electrochromic device 20. The device 20 includes isolated transparent conductive layer regions 26A and 26B that have been formed on a substrate 34, such as glass. In addition, the device 20 includes a counter electrode layer 28, an ion conductive layer 32, an electrochromic layer 30 and a transparent conductive layer 24, which have been deposited in sequence over the conductive layer regions 26. It is to be understood that the relative positions of the electrochromic and counter electrode layers of the device 20 may be interchanged. Further, the device 20 includes a bus bar 40 which is in contact only with the conductive layer region 26A, and a bus bar 42 which may be formed on the conductive layer region 26B and is in contact with the conductive layer 24. The conductive layer region 26A is physically isolated from the conductive layer region 26B and the bus bar 42, and the conductive layer 24 is physically isolated from the bus bar 40. Although an electrochromic device may have a variety of shapes, such as including curved sides, the illustrative, exemplary device 20 is a rectangular device with the bus bars 40 and 42 extending parallel to each other, adjacent to respective opposing sides 25, 27 of the device 20, and separated from each other by a distance W. Further, the bus bars 40 and 42 are connected by wires to positive and negative terminals, respectively, of a low voltage electrical source 22 (the wires and the source 22 together constituting an "external circuit").

Referring to FIGs. 1A and 1B, when the source 22 is operated to apply an electrical potential across the bus bars 40, 42, electrons, and thus a current, flows from the bus bar 42, across the transparent conductive layer 24 and into the electrochromic layer 30. In addition, if the ion conductive layer 32 is an imperfect electronic insulator as is the case in many thin film EC devices, a small current, commonly referred to as a leakage current, flows from the bus bar 42, through the conductive layer 24 and the electrochromic layer 30, and into the ion conductive layer 32. Further, ions flow from the counter electrode layer 28, through the ion conductive layer 32, and to the electrochromic layer 30, and a charge balance is maintained by electrons being extracted from the counter electrode layer 28, and then being inserted into the electrochromic layer 30 via the external circuit. As the current flows away from the bus bar 42 across the conductive layer 24 and towards the bus bar 40, voltage is dropped by virtue of the finite sheet resistance of the conductive layer 24, which is typically about 10-20 Ohms/square. In addition, current flowing across the conductive layer 24 is incrementally reduced, as current is drawn through the combination of the layers 30, 32 and 28 ("stack") to produce the electrochromic coloration in the device 20.

Consequently, it is believed that if the device 20 is considered to be formed from successive adjacent segments arranged between the bus bars 40, 42 and extending between the transparent conductor layer 24 and the conductive layer region 26B, the amount of current flowing through the stack at the segment of the conductive layer 24 closest to the bus bar 40 will be close to zero, as the majority of the current will have passed down through the stack. Assuming that the sheet resistance of the transparent conductive layer 24 is substantially uniform between the bus bars 40 and 42, the voltage drop across the transparent conductive layer 24 extending between the bus bars 40, 42, will be proportional to the current flowing through each successive segment of the device 20. Thus, the rate of voltage drop in the transparent conductive layer with respect to distance away from the bus bar 42 will be at a maximum closest to the bus bar 42 and practically zero close to the bus bar 40. A substantially mirrored image of the current flow occurs with respect to the flow of current from the bus bar 40 across the conductive layer region 26A and toward the bus bar 42, in that the current flow across the device 20 in the conductive layer region 26A increases from the bus bar 40 to the bus bar 42 as a result of contributions from successive segments of the device 20. The difference between the voltage profiles for the conductive layer 24 and the conductive layer region 26A, across the width of the device between the bus bars 40, 42, is the potential difference between the conductive layer 24 and the conductive layer region 26A across the width of the electrochromic device extending between the bus bars 40, 42.

The potential difference determines the maximum rate of current flow through each segment from the counter electrode layer 28 to the electrochromic layer 30 causing the device 20 to transform to a colored state and, thus, causing coloring of the device 20. Current will flow at a rate proportional to the potential difference across the segments of the device, provided there is a ready supply of charge, in the form of lithium ions and electrons, to satisfy the requirements. The net result is that a non-uniform coloration is initially produced, with the regions closest to the bus-bars, where the potential difference between the transparent conductors is largest, coloring faster than the region in the middle of the device. In an ideal device, which would not have any leakage current, this non-uniformity will even out as the supply of available charge in the counter electrode layer is exhausted, first closest to the bus-bars, and then in the center of the device, as the electrochromic device attains a fully colored state, thereby yielding uniform coloration across the entire area of the device.

After a voltage is initially applied across the bus bars 40, 42 of the electrochromic device 20, the current flowing through the device 20 will drop towards zero, and thus the voltage drops across each of the transparent conductive layers will also approach zero. Whether the voltage between the conductive layer 24 and the conductive layer region 26A, across the width of the electrochromic device 20 extending between the bus bars 40, 42, will become equal or substantially equal to a constant, such as about the applied voltage, in the fully colored state, thereby ultimately yielding a relatively uniform coloration in the electrochromic device 20, however, depends in part upon the width of the conductive layer 24 and the conductive layer region 26A of the electrochromic device 20 extending between the bus bars 40, 42 across which the current flows and the magnitude of the leakage current through the device.

In large sized electrochromic devices having a construction similar to that of the device 20, where the current flows a relatively large distance, such as in excess of about 40 inches, across the conductive layers of the electrochromic device between the opposing bus bars, non-uniform coloration of the device may persist even at full coloration, because a large and non-uniform voltage drop occurs through the stack across the width of the conductive layers extending from the opposing bus bars. This non-uniform voltage drop is caused by the effects of leakage current through the device, which is typically present in electrochromic devices because of the thin-film construction of the layers of the stack. Leakage current flows through the stack, such that a potential difference variation is created across the width of the electrochromic device extending between the bus bars. If the leakage current is significantly large, the potential difference variation becomes sufficiently large to cause a non-uniform coloration in the electrochromic device that may be visible to the naked eye. The non-uniform coloration in the electrochromic device typically results in a lighter area near a region midway between the opposing bus bars ("middle region"), than at regions of the electrochromic device near the bus bars. In other words, the middle region of the electrochromic device does not experience the same color change, or the same amount of darkening or consistency of darkening, as those regions closer to the bus bars at the sides of the electrochromic device.

It is has been observed that when electrochromic devices constructed similar to the device 20 are operated at normal operating voltages, such as between around 2.5V and 4.0V, the leakage current is on the order of 50-500mA/m², such that non-uniform coloration across the electrochromic device may become visible to a naked eye when the distance between the opposing bus bars is at least about 30 inches. For typical leakage current levels, color non-uniformity is not readily apparent to the naked eye when the electrochromic device is in the fully colored state and has bus-bar separations less than about 30 inches.

Referring to FIG. 1A, it is highly desirable to position the bus bars 40, 42 very close to the sides 25, 27 of the device 20 to maximize the region of the device 20, which is between the bus bars 40, 42 and, thus, in which coloration can be controlled. Also, by positioning the bus bars near the sides of the device 20, the bus bars, which typically have a thickness of not more than about 0.25 inches, are not visible or are minimally visible, such that the device is aesthetically pleasing when installed in a typical window frame. Large sized electrochromic devices, in which the distance between the bus bars, which typically are at opposing sides of the device, is in excess of about 40 inches, are desirable for many applications, such as a window of an office building or a glass windshield of a car. Thus, in the operation of such large sized electrochromic devices, non-uniform coloration may occur due to the effects of leakage currents, as discussed above, which is not desirable.

Also, it has been observed that, in large sized electrochromic devices similar to the device 20, the regions of the device adjacent to the opposing bus bars change color or darken more quickly than at a middle region between the bus bars. Further, it has been observed that these same large sized electrochromic devices may change transmission state (or color) more slowly than electrochromic devices having smaller distances between opposing bus bars. This phenomenon is largely due to the current draw in the larger device being larger, and therefore leading to a larger voltage drop in the transparent conductor layers, thereby reducing the net potential applied to the stack relative to an electrochromic device having a smaller width between opposing bus bars. Also, the slower change in coloration is based, in part, on the application of a voltage to the electrochromic device which is below a maximum level, such as 3V, to avoid overdriving of the electrochromic device at the portions near the bus bars, which may cause damage to the layers of the stack.

For example, for a prior art electrochromic device similar to the device 20 having opposing bus bars separated by about six inches, the typical time for the device to change from a full transmission state (fully clear) to a colored state where only five percent of light is transmitted through the device is about 100 seconds, whereas for an electrochromic device similar to the device 20 having bus bars separated by about thirty inches the typical time for obtaining the same coloration change may be about as much as 400 seconds.

US Publication No. 2011/0260961 discloses a three-bus electrochromic device, wherein the two zones formed are not independently controllable.

US Publication No. 2009/0323160 discloses a zoned electrochromic device comprising an area between two adjacent dynamic electrochromic zones which electrically isolates the two adjacent dynamic electrochromic zones. In other words, this publication discloses zones which are completely isolated.

US4832468 discloses a substrate comprising multiple, independently controllable electrochromic zones.

WO2009158 discloses a multi-pane electrochromic window having independently controllable dynamic zones.

FR2957159 discloses a substrate comprising multiple, independently controllable electrochromic zones of different sizes sharing a common electrode on a different substrate.

### SUMMARY OF THE INVENTION

In one aspect of the present invention is a substrate comprising multiple, independently controllable electrochromic zones, wherein the multiple electrochromic zones share at least one common, continuous bus bar. In one embodiment, of the electrochromic zones are not completely isolated from each other. In another embodiment, each of the electrochromic zones have the same surface area. In another embodiment, each of the electrochromic zones have a different surface area.

In another embodiment, the substrate comprises three bus bars. In another embodiment, the three bus bars are spaced such that a interior bus bar is sandwiched between a first end bus bar and a second end bus bar. In another embodiment, a first electrochromic zone is defined by the space between the interior bus bar and the first end bus bar and a second electrochromic zone is defined by the space between the interior bus bar and the second end bus bar. In another embodiment, the electrochromic zones are formed from a single electrochromic coating on the substrate. In another embodiment, the three bus bars are substantially parallel to each other. In another embodiment, the three bus bars run substantially the length of the substrate and each of the three bus bars are approximately the same size.

In another embodiment, the electrochromic zones are formed from a single electrochromic coating on the substrate, wherein the single electrochromic coating is cut to form individual electrochromic zones. In another embodiment, the substrate comprises a first bus bar and a second bus bar, wherein the first bus bar runs continuously over each electrochromic zone. In another embodiment, the second bus bar is formed from a single bus bar and cut to form individual bus bar segments, wherein each bus bar segment corresponds to an electrochromic zone.

In another embodiment, the substrate is selected from the group consisting of glass, plastic, and a laminate of two of the same or different materials. In another embodiment, the substrate is a window pane or window assembly. In another embodiment, the substrate is a part of an insulated glass unit.

In another embodiment, each of the multiple electrochromic zones comprise: a first electrode comprising one of an electrochromic layer or a counter electrode layer, a second electrode comprising other of the electrochromic layer or the counter electrode layer, an ion-conductor layer for conducting ions between the first and second electrodes, a first conductive layer, and a second conductive layer, the first and second electrodes and the ion-conductor layer being sandwiched between the first and second conductive layers.

In another aspect of the present invention is a method of forming a substrate having multiple electrochromic zones comprising: (1) depositing an electrochromic coating on the substrate, and (2) depositing multiple bus bars on the electrochromic coating so as to form multiple electrochromic zones from the electrochromic coating, wherein the formed multiple electrochromic zones share at least one common continuous bus bar. In one embodiment, the method comprises depositing at least three bus bars such that the spacing of the at least three bus bars forms at least two electrochromic zones. In another embodiment, the electrochromic coating is cut to form two electrochromic zones.

In another aspect of the present invention, is a method of controlling a multi-zone electrochromic device.

In another aspect of the present invention, is a method of installing a multi-zone electrochromic device, or an IGU comprising a multi-zone electrochromic device, in a vehicle or building.

### BRIEF DESCRIPTION OF THE DRAWINGS

FIG. 1A is a top plan view of a prior art electrochromic device.
FIG. 1B is a view of the electrochromic device of FIG. 1A at cross-sectional line 1B-1B.
FIG. 2 is a cross-sectional view of a multi-zone electrochromic device.
FIG. 3A is a top plan view of a multi-zone electrochromic device.
FIG. 3B is a cross-sectional view of a multi-zone electrochromic device.
FIG. 4A depicts an electrochromic device having two zones and three wires.
FIG. 4B depicts an electrochromic device having three zones and four wires.
FIG. 5 depicts a three zone electrochromic device, and associated wiring, where one of the zones has a non-rectangular shape.
FIG. 6 depicts a two zone electrochromic device, and associated wiring, where the electrochromic device comprises a segmented bus bar.
FIG. 7 depicts a two zone electrochromic device having three bus bars.
FIG. 8 depicts a three zone electrochromic device having four bus bars.
FIG. 9 depicts a two zone electrochromic device.

### DETAILED DESCRIPTION

In one aspect of the present invention is a substrate comprising multiple, independently controllable electrochromic zones, wherein each of the electrochromic zones share a common, continuous bus bar. In one embodiment, each of the electrochromic zones are not completely isolated from each other. In some embodiments, each of the electrochromic zones may have the same or different sizes and/or surface areas. In other embodiments, each of the electrochromic zones may have the same or different shapes (including curved or arcuate shapes).

Generally, the multi-zone EC devices of the present invention fall into two categories: (1) those comprising two bus bars at the opposing sides or edges of an EC device and additional bus bars positioned in an interior spaced between the opposing side or edge bus bars; and (2) those where electrochromic zones are formed from a single electrochromic coating on a substrate, wherein the single electrochromic coating is cut to form individual electrochromic zones. Each of these types of multi-zone EC devices, and their respective processes of fabrication, are discussed herein.

It is believed that multi-zone electrochromic devices according to the present invention provide many advantages over conventional dynamic IGUs, such as permitting optimized harvesting of natural daylight through one or more dynamic zones, while being able to maximize solar-control advantages in the other dynamic zones of the window. Different dynamic zones can be created at any arbitrary distance from the edge of a window in order to satisfy diverse design goals and requirements.

In one aspect of the present invention is a multi-zone electrochromic device where, in addition to the bus bars disposed at the opposing sides of an EC device, additional bus bars are positioned in an interior space between the opposing side bus bars. In one embodiment, an interior bus bar is positioned between a first end opposing bus bar and a second end opposing bus bar. Of course, the present invention is not limited to embodiments where multi-zone EC devices comprise three bus bars and hence two zones. Multi-zone EC devices comprising four or more bus bars (having three or more zones, respectively) are equally contemplated.

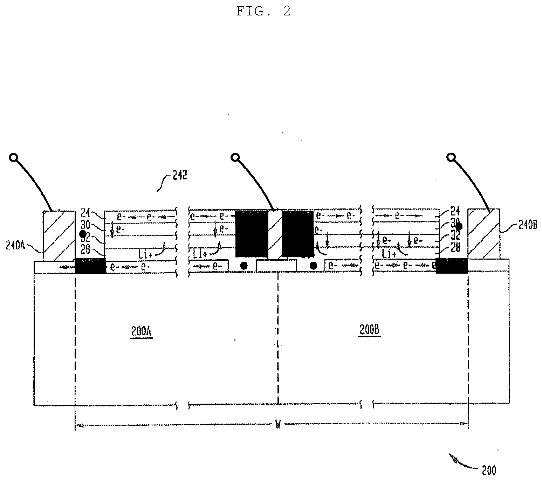

For example, referring to FIG. 2, a multi-zone electrochromic device 200 includes two independently operable and controllable zones, namely 200A and 200B (or electrochromic device zones). An exemplary multi-zone EC device 200 may include a central bus bar 242 and bus bars 240A and 240B at the opposing sides or edges of the respective zones ("outside bus bars" or "first and second opposing end bus bars"). The interior bus bar 242 is common to both of zones 200A and 200B of the multi-zone EC device 200. Accordingly, a first electrochromic zone 200A is defined by the space between the interior bus bar 242 and the first end bus bar 240A and a second electrochromic zone 200B is defined by the space between the interior bus bar 242 and the second end bus bar 240B.

In this particular embodiment of FIG. 2, the interior bus bar is positioned at a central location relative to the first and second end opposing bus bars. However, the interior bus bar may be present at any position between the first and second end opposing bus bars. The bus bars 242 and 240A and 240B may be separated by the same or different distances. In some embodiments, the bus bar 242 is in a central region of the device and is positioned equidistant from each of bus bars 240A and 240B. In other embodiments, the bus bar 242 is positioned between said bus bars 240A and 240B, but the distance between 242 and 240A is different than the distance between 242 and 240B.

In embodiments having more than two zones, the additional interior bus bars may be positioned at any location between the first and second end opposing bus bars. For example, the additional interior bus bars comprising a device having more than two zones may be placed at equidistant intervals between the first and second end opposing bus bars. It is believed that this may result in a device having multiple zones, where each zone has about the same surface area. Alternatively, the additional interior bus bars comprising a device having more than two zones may be placed at different distances between the first and second opposing end bus bars, resulting in zones having different surface areas.

The multi-zone device is fabricated on a single substrate (e.g. glass or plastic). In some embodiments, the multi-zone electrochromic device is produced from a single continuous EC device (i.e. a single continuous stack of thin films deposited on a glass substrate). In other embodiments, two EC devices are independently deposited on a glass substrate, which each individually deposited EC device has a single bus bar at a side or edge and whereby an interior bus bar is deposited and shared between both devices. For example, a first device 20 is disposed adjacent to and in mirror image to a second device 20, such that the bus bars 42 of the respective first and second devices 20 contact each other. The compositional layers comprising an EC device and their method of formation or deposition are disclosed in US Patent Nos. 8,004,744, 7,830,585, 7,593,154, 7,372,610, the disclosures of each are hereby incorporated by reference herein in their entirety. For example, techniques for forming the layers of an electrochromic zone or an electrochromic device in a well-known manner generally comprise physical vapor deposition, sputtering, pyrolytic-coating techniques, wet-chemical techniques, such as a sol gel process, spin-coating techniques, and vacuum-coating techniques.

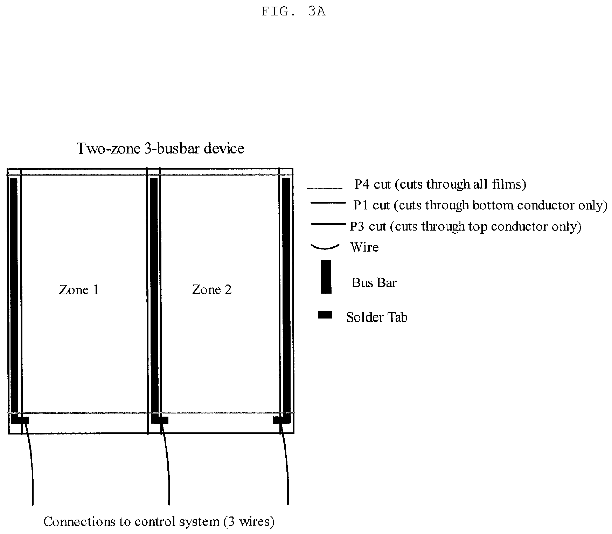

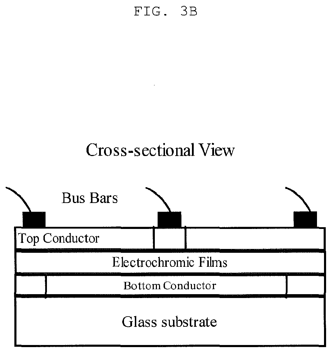

In some embodiments, the glass substrate is coated with a bottom transparent conductor. This conductor is then cut with a P1 process to isolate different regions of the coatings, as shown in FIGs. 3A and 3B. Next, the electrochromic films are coated over the top, followed by the upper transparent conductive film. Those skilled in the art will recognize that additional optical coatings or functional coatings, such as anti-reflective coatings and reflective or tinted coatings for color-matching, or barrier coatings such as those which prevent migration of moisture from the environment or sodium ions from the glass may additionally be included above or below either of the top or bottom transparent conductors.

At the end of the process, a last laser process makes the depicted P3 cuts (through the top conductor but not the bottom conductor) and the depicted P4 cuts (through both conductors) to finish isolating the films into the desired zones. Bus bars are applied to the glass, followed by any additional process required (e.g., heating steps to fire the bus bars or films). Lasers that are suitable for producing the cuts or ablation lines include solid-state lasers, such as Nd:YAG at a wavelength of 1064 nm, and excimer lasers, such as ArF and KrF excimer lasers respectively emitting at 248 nm and 193 nm. Other solid-state and excimer lasers are also suitable.

Once deposition of the films comprising the EC stack/EC device and once the bus bars are deposited on the stack, the single pane of glass is fabricated into a laminate or insulated-glass unit. Methods of creating a laminate comprising an EC device are disclosed in US Patent Publication No. 20110267672, the disclosure of which is hereby incorporated by reference herein in its entirety. As part of this fabrication process, wires will be attached to the solder tab portion of each bus bar (see, for example, copending application US Serial No 61/490,291, the disclosure of which is incorporated by reference herein).

Because the two (or more) electrochromic zones are not completely independent, but share a common bus bar, it is not possible to simply connect two channels of a standard electrochromic control system to the glass. A typical electrochromic control system will have a bridge-type output, in which the output voltage is varied between +5V and -5V using only positive voltages, by varying which connection is at ground potential. For example, applying ground (0V) to the negative wire and 3V to the positive wire yields a positive 3V to an electrochromic pane, but reversing the two and applying 3V to the negative wire and ground (0V) to the positive wire yields -3V to the pane.

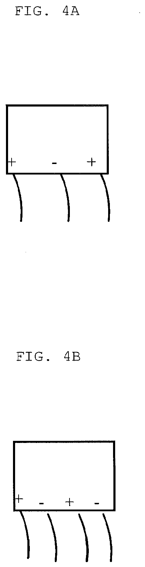

The solution for multi-zone EC devices having three zones is to add up the required voltage for each pane and determine the correct potential to apply to each wire (see, e.g., FIG. 4A). If one skilled in the art were to apply 4V to the first wire, 2V on the second, and 0V on the third, the result would be +2V on the first pane and -2V on the second pane. In this way, the two panes can be completely independently controlled. Generally, the control system must be capable of applying up to twice the voltage required of a single-zone controller, however. Similar logic applies to other multi-zone EC devices having more than two zones, such as four bus bar, three zone devices.

Another example is a 3-zone (4-busbar) device in which it is desired to tint the first two panes at +3V, and clear the third at -2V. If the polarity of the bus bars in sequence is +/-/+/-, we can apply 3V, 0V, 3V, and 5V with respect to ground. The difference between the first two is 3-0=3; between the second and third is 3-0-3; and between the third and fourth is 3-5=-2. Note that for the purpose of driving the electrochromic device, the absolute potential with respect to ground is less important, as opposed to the difference between potentials at adjacent bus bars. As such 4V, 1V, 4V and 6V, respectively, could have been applied to achieve the same result.

Current monitoring in each sub-pane is also believed to be more complicated in standard, single zone EC devices. In the 2-zone, 3-busbar case, the two outside wires may be monitored to determine the current in each sub-pane, whereas the middle wire carries the sum of the two currents. The 3-zone, 4-busbar case is more complicated yet. Here, the first wire carries the current of the first zone and the fourth wire carries the current of the third zone (see, e.g., 4B). But to determine the current flowing in the second (middle) zone, it is necessary to calculate the difference in current between either the first and second wires, or between the third and fourth wires.

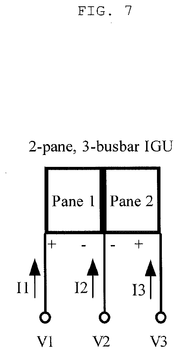

Referring to FIG. 7, for this 2-pane, 3-busbar IGU, Pane 1 has an applied voltage given by (V1-V2) and current I1, while Pane 2 has applied voltage of V3-V2 and current 13.

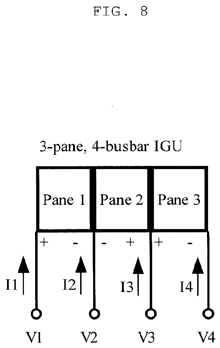

With reference to FIG. 8, for this 3-pane, 4-busbar IGU, Pane 1 still has applied voltage given by (V1-V2) and current I1. Pane 2 still can measure applied voltage as (V3-V2) but current is given by either (I2-I1) or (I4-I3). Pane 3 voltage is (V3-V4), with current (-I4).

Since multi-zone electrochromic devices have fully independent control of each zone, it is possible for the zones to be different in size or shape. For example, and with reference to FIG. 2, while each of zones 200A and 200B are depicted as having a generally rectangular shape, the subject matter disclosed herein provides that a plurality of zones, each having a selected shape, may be used. Further still, while multi-pane IGU 200 is depicted as having a generally rectangular shape, the subject matter disclosed herein provides that a multi-pane IGU of any selected size and shape can be used.

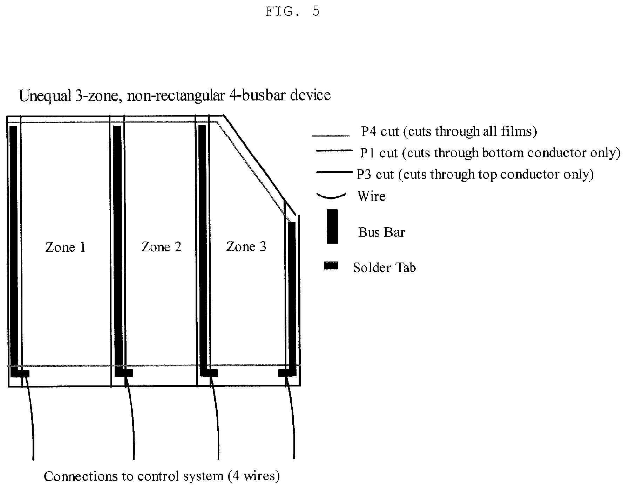

As a further non-limiting example, FIG. 5 shows a 4-busbar, 3-zone device in which the zones are different sizes (difference surface areas), and where one of the three zones is not rectangular in shape. For such devices, it is necessary to determine the appropriate voltage and current protocols to manage each individual sub-pane, and then the voltage may be controlled and current monitored as described above in order to manage each sub-pane with complete autonomy.

Because it is believed that the center bus bar(s) carry (ies) twice the current of the edge bus bars, it is possible to reduce the thickness or width of the edge bus bars to achieve half the conductivity of the center bus bar. Alternatively, all bus bars may be made consistently large enough to carry the full current.

In another aspect of the present invention, the electrochromic zones are formed from a single electrochromic coating on the substrate, wherein the single electrochromic coating is cut to form individual electrochromic zones. In some embodiments, the substrate comprises a first bus bar and a second bus bar, wherein the first bus bar runs continuously over each electrochromic zone. The second bus bar is segmented wherein each bus bar segment corresponds to an electrochromic zone. Each zone may be of a different size or shape, so long as it can be designed in such a way that a single bus bar traverses all zones along one side.

The segmented second bus bar may formed from a single bus bar (applied just as the first bus bar is applied) and cut to form individual bus bar segments. In an alternate embodiment, the segmented second bus is applied in segments or applied as a single bus bar that has one or more gaps.

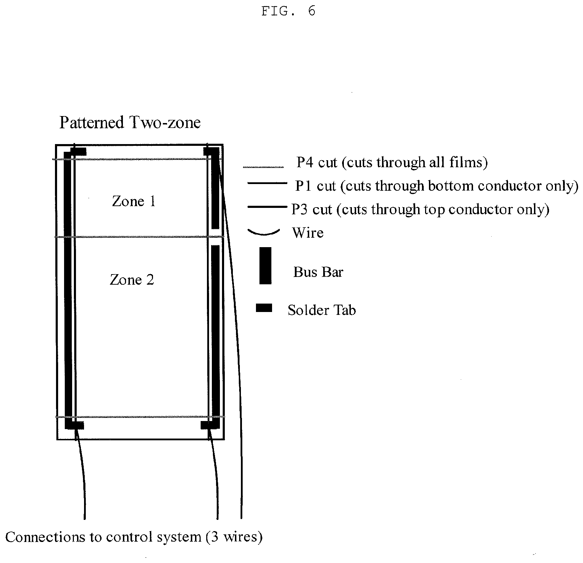

Most of the processing (e.g. laser processing/cutting) is identical to a normal 2-busbar device. With reference to FIG. 6, however, there is an extra P4 cut which severs the films completely between the two operating zones, preventing any current flow between them. In addition, one of the bus bars is segmented. Electrically, this unit works just like a 3-busbar 2-zone device discussed previously, with one busbar connected to the bottom conductor of both zones, and two separate busbars connected to the top conductor of each zone. The control hardware and logic is identical to the 3-busbar case. Of course, the same logic applies to devices having more than two zones.

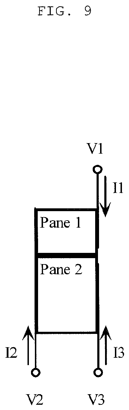

With reference to FIG. 9, for this 2-pane device having a segmented bus bar, Pane 1 has an applied voltage given by (V1-V2) and current I1, while Pane 2 has applied voltage of V3-V2 and current 13.

In some embodiments, photochromic or thermochromic materials may be used in place or in addition to the electrochromic materials disclosed herein. For example, some zones my comprise electrochromic materials while other zones may comprise at least one of an electrochromic, photochromic, or thermochromic material. Suitable photochromic materials include, but are not limited to, triarylmethanes, stilbenes, azastilbenes, nitrones, fulgides, spriropyrans, naphthopyrans, sprio-oxazines, and quinones. Suitable thermochromic materials include, but are not limited to, liquid crystals and leuco dyes. Both photochromic and thermochromic materials can be formed on the substrate in a well-known manner. No bus bars would be needed for photochromic or thermochromic dynamic zones because light and heat respectively modulate the properties of the materials. One exemplary embodiment using photochromic and/or thermochromic dynamic zones could be a window having at least one electrochromic dynamic zone towards the top of the window that is actively controlled for daylighting and at least one photochromic dynamic zone towards the bottom of the window that self darkens when under direct light, and at least a second electrochromic zone posited in another region of the device.

Further, it should be understood that one exemplary embodiment of the subject matter disclosed herein can comprise a window, such as an architectural window, having a single pane, or lite, that comprises a plurality of independently controlled dynamic zones. Another exemplary embodiment of the subject matter disclosed herein comprises an IGU comprising multiple zones of electrochromic window on one pane and clear glass on the other pane. Yet another exemplary embodiment of the subject matter disclosed herein comprises an IGU comprising multiple zones of electrochromic window on one pane and a low-E, tinted, or reflective glass on the other pane. Still another exemplary embodiment of the subject matter disclosed herein comprises an IGU comprising multiple zones of electrochromic window on one pane of the IGU and a patterned or special glass on the other pane in which the patterning or features may match, compliment, and/or contrast the areas of dynamic zones on the first pane. It should be understood that the foregoing exemplary embodiments can be configured so that the lite comprising the plurality of dynamic zones is a clear lite, a low-E lite, a reflective, and/or partially reflective lite.

Those of ordinary skill in the art will recognize that any of the control, power, or wiring systems (including wireless control) described in copending application US 13/354,863 may be adapted for use with a multi-zone electrochromic device as described herein.

## Claims

1. A substrate comprising multiple, independently controllable electrochromic zones (200A and 200B), wherein:
each of said multiple electrochromic zones (200A and 200B) comprises:
a first electrode comprising one of an electrochromic layer (30) or a counter electrode layer (28);
a second electrode comprising other of said electrochromic layer (30) or said counter electrode layer (28);
an ion-conductor layer (32) for conducting ions between said first and second electrodes;
a first conductive layer (24); and
a second conductive layer (24),
said first and second electrodes and said ion-conductor layer (32) being sandwiched between said first and second conductive layers (24); and
wherein the multiple electrochromic zones (200A and 200B) share at least one common, continuous bus bar.

2. The substrate of claim 1, wherein each of said electrochromic zones (200A and 200B) are not completely isolated from each other.

3. The substrate as claimed in any of the preceding claims, wherein each of said electrochromic zones (200A and 200B) has the same surface area.

4. The substrate as claimed in any of the preceding claims, wherein each of said electrochromic zones (200A and 200B) has a different surface area.

5. The substrate of claim 1, wherein said substrate comprises three bus bars, and said three bus bars (240A, 242, 240B) are spaced such that an interior bus bar (242) is sandwiched between a first end opposing bus bar (240A) and a second end opposing bus bar (240B).

6. The substrate of claim 5, wherein a first electrochromic zone (200A) is defined by the space between said interior bus bar (242) and said first end bus bar (240A) and a second electrochromic zone (200B) is defined by the space between said interior bus bar (242) and said second end bus bar (240B).

7. The substrate of claim 6, wherein said electrochromic zones (200A and 200B) are formed from a single electrochromic coating on said substrate.

8. The substrate of claim 5 or 6, wherein said three bus bars (240A, 242, 240B) are substantially parallel to each other.

9. The substrate of claim 1, wherein said electrochromic zones (200A and 200B9 are formed from a single electrochromic coating on said substrate, wherein said single electrochromic coating is cut to form individual electrochromic zones (240A, 242, 240B).

10. The substrate of claim 9, wherein said substrate comprises a first bus bar and a second bus bar, wherein said first bus bar runs continuously over each electrochromic zone (200A and 200B).

11. The substrate of claim 10, wherein said second bus bar is formed from a single bus bar and cut to form individual bus bar segments, wherein each bus bar segment corresponds to an electrochromic zone (200A and 200B).

12. The substrate as claimed in any of the preceding claims, wherein:
said substrate is selected from the group consisting of glass, plastic, and a laminate of two of the same or different materials; and/or
said substrate is a window pane or window assembly; and/or
said substrate is a part of an insulted glass unit.

13. A method of forming a substrate having multiple independently controllable electrochromic zones (200A and 200B) comprising: (1) depositing an electrochromic coating on said substrate, (2) cutting said coating to form multiple electrochromic zones (200A and 200B), and (3) depositing multiple bus bars (240A, 242, 240B) on said electrochromic coating, wherein said formed multiple electrochromic zones (200A and 200B) share at least one common continuous bus bar.

14. The method of claim 13, wherein said method comprises depositing at least three bus bars (240A, 242, 240B) such that the spacing of said at least three bus bars (240A, 242, 240B) forms at least two electrochromic zones (200A and 200B).

15. The method of any of claims 13 or 14, wherein each of said electrochromic zones (200A and 200B) is not completely isolated from each other.

## Patentansprüche

1. Substrat, umfassend mehrere unabhängig steuerbare elektrochrome Zonen (200A und 200B), wobei:
Jede der mehreren elektrochromen Zonen (200A und 200B) Folgendes umfasst:
eine erste Elektrode, die eine einer elektrochromen Schicht (30) oder einer Gegenelektrodenschicht (28) umfasst;
eine zweite Elektrode, die die andere der elektrochromen Schicht (30) oder der Gegenelektrodenschicht (28) umfasst;
eine lonenleiterschicht (32) zum Leiten von Ionen zwischen der ersten und der zweiten Elektrode;
eine erste leitfähige Schicht (24); und
eine zweite leitfähige Schicht (24),
wobei die erste und die zweite Elektrode und die lonenleiterschicht (32) zwischen der ersten und der zweiten leitfähigen Schicht (24) angeordnet sind; und
wobei sich die mehreren elektrochromen Zonen (200A und 200B) mindestens eine gemeinsame durchgehende Sammelschiene teilen.

2. Substrat nach Anspruch 1, wobei jede der elektrochromen Zonen (200A und 200B) nicht vollständig voneinander isoliert ist.

3. Substrat nach einem der vorhergehenden Ansprüche, wobei jede der elektrochromen Zonen (200A und 200B) den gleichen Oberflächenbereich aufweist.

4. Substrat nach einem der vorhergehenden Ansprüche, wobei jede der elektrochromen Zonen (200A und 200B) einen unterschiedlichen Oberflächenbereich aufweist.

5. Substrat nach Anspruch 1, wobei das Substrat drei Sammelschienen umfasst und die drei Sammelschienen (240A, 242, 240B) so beabstandet sind, dass eine innere Sammelschiene (242) zwischen einem ersten Ende gegenüber von Sammelschiene (240A) und einem zweiten Ende gegenüber von Sammelschiene (240B) eingefügt ist.

6. Substrat nach Anspruch 5, wobei eine erste elektrochrome Zone (200A) durch den Raum zwischen der inneren Sammelschiene (242) und der ersten End-Sammelschiene (240A) definiert ist und eine zweite elektrochrome Zone (200B) durch den Raum der inneren Sammelschiene (242) und der zweiten End-Sammelschiene (240B) definiert ist.

7. Substrat nach Anspruch 6, wobei die elektrochromen Zonen (200A und 200B) aus einer einzelnen elektrochromen Beschichtung auf dem Substrat gebildet sind.

8. Substrat nach Anspruch 5 oder 6, wobei die drei Sammelschienen (240A, 242, 240B) im Wesentlichen parallel zueinander sind.

9. Substrat nach Anspruch 1, wobei die elektrochromen Zonen (200A und 200B) aus einer einzelnen elektrochromen Beschichtung auf dem Substrat gebildet sind, wobei die einzelne elektrochrome Beschichtung geschnitten ist, um einzelne elektrochrome Zonen (240A, 242, 240B) zu bilden.

10. Substrat nach Anspruch 9, wobei das Substrat eine erste Sammelschiene und eine zweite Sammelschiene umfasst, wobei die erste Sammelschiene kontinuierlich über jede elektrochrome Zone (200A und 200B) verläuft.

11. Substrat nach Anspruch 10, wobei die zweite Sammelschiene aus einer einzelnen Sammelschiene gebildet und geschnitten ist, um einzelne Sammelschienensegmente zu bilden, wobei jedes Sammelschienensegment einer elektrochromen Zone (200A und 200B) entspricht.

12. Substrat nach einem der vorhergehenden Ansprüche, wobei:
das Substrat ausgewählt ist aus der Gruppe bestehend aus Glas, Kunststoff und einem Laminat aus zwei gleichen oder verschiedenen Materialien; und/oder
das Substrat eine Fensterscheibe oder Fensteranordnung ist; und/oder
das Substrat ein Teil einer Isolierglaseinheit ist.

13. Verfahren zum Bilden eines Substrats mit mehreren unabhängig steuerbaren elektrochromen Zonen (200A und 200B), umfassend: (1) Abscheiden einer elektrochromen Beschichtung auf dem Substrat, (2) Schneiden der Beschichtung zur Bildung mehrerer elektrochromer Zonen (200A und 200B) und (3) Abscheiden mehrerer Sammelschienen (240A, 242, 240B) auf der elektrochromen Beschichtung, wobei sich die mehreren elektrochromen Zonen (200A und 200B) mindestens eine gemeinsame durchgehende Sammelschiene teilen.

14. Verfahren nach Anspruch 13, wobei das Verfahren das Aufbringen von mindestens drei Sammelschienen (240A, 242, 240B) umfasst, so dass der Abstand der mindestens drei Sammelschienen (240A, 242, 240B) mindestens zwei elektrochrome Zonen (200A und 200B) bildet.

15. Verfahren nach einem der Ansprüche 13 oder 14, wobei jede der elektrochromen Zonen (200A und 200B) nicht vollständig voneinander isoliert ist.

## Revendications

1. Substrat comprenant plusieurs zones électrochromes (200A et 200B) contrôlables indépendamment, dans lequel :
chacune desdites multiples zones électrochromes (200A et 200B) comprend :
une première électrode comprenant une couche parmi une couche électrochrome (30) ou une couche de contre-électrode (28) ;
une seconde électrode comprenant l'autre couche parmi ladite couche électrochrome (30) ou ladite couche de contre-électrode (28) ;
une couche conductrice d'ions (32) pour conduire des ions entre lesdites première et seconde électrodes ;
une première couche conductrice (24) ; et
une seconde couche conductrice (24),
lesdites première et seconde électrodes et ladite couche conductrice d'ions (32) étant prises en sandwich entre lesdites première et seconde couches conductrices (24) ; et
dans lequel les multiples zones électrochromes (200A et 200B) partagent au moins une barre omnibus continue, commune.

2. Substrat selon la revendication 1, dans lequel lesdites zones électrochromes (200A et 200B) ne sont pas complètement isolées l'une de l'autre.

3. Substrat selon l'une quelconque des revendications précédentes, dans lequel chacune desdites zones électrochromes (200A et 200B) a la même surface.

4. Substrat selon l'une quelconque des revendications précédentes, dans lequel chacune desdites zones électrochromes (200A et 200B) a une surface différente.

5. Substrat selon la revendication 1, dans lequel ledit substrat comprend trois barres omnibus, et lesdites trois barres omnibus (240A, 242, 240B) sont espacées de sorte qu'une barre omnibus intérieure (242) est prise en sandwich entre une première barre omnibus d'extrémité opposée (240A) et une seconde barre omnibus d'extrémité opposée (240B).

6. Substrat selon la revendication 5, dans lequel une première zone électrochrome (200A) est définie par l'espace entre ladite barre omnibus intérieure (242) et ladite première barre omnibus d'extrémité (240A) et une seconde zone électrochrome (200B) est définie par l'espace entre ladite barre omnibus intérieure (242) et ladite seconde barre omnibus d'extrémité (240B).

7. Substrat selon la revendication 6, dans lequel lesdites zones électrochromes (200A et 200B) sont formées à partir d'un revêtement électrochrome unique sur ledit substrat.

8. Substrat selon la revendication 5 ou 6, dans lequel lesdites trois barres omnibus (240A, 242, 240B) sont sensiblement parallèles les unes aux autres.

9. Substrat selon la revendication 1, dans lequel lesdites zones électrochromes (200A et 200B) sont formées à partir d'un revêtement électrochrome unique sur ledit substrat, ledit revêtement électrochrome unique étant découpé pour former des zones électrochromes (240A, 242, 240B) individuelles.

10. Substrat selon la revendication 9, dans lequel ledit substrat comprend une première barre omnibus et une seconde barre omnibus, dans lequel ladite première barre omnibus défile en continu sur chaque zone électrochrome (200A et 200B).

11. Substrat selon la revendication 10, dans lequel ladite seconde barre omnibus est formée à partir d'une barre omnibus unique et découpée pour former des segments de barre omnibus individuels, dans lequel chaque segment de barre omnibus correspond à une zone électrochrome (200A et 200B).

12. Substrat selon l'une quelconque des revendications précédentes, dans lequel :
ledit substrat est choisi dans le groupe constitué par le verre, le plastique et un stratifié de deux matériaux identiques ou différents ; et/ou
ledit substrat est une vitre ou un ensemble de vitres ; et/ou
ledit substrat fait partie d'une unité de vitrage isolée.

13. Procédé de formation d'un substrat ayant plusieurs zones électrochromes (200A et 200B) contrôlables indépendamment comprenant : (1) le dépôt d'un revêtement électrochrome sur ledit substrat, (2) la découpe dudit revêtement pour former de multiples zones électrochromes (200A et 200B), et (3) le dépôt de multiples barres omnibus (240A, 242, 240B) sur ledit revêtement électrochrome, lesdites multiples zones électrochromes (200A et 200B) formées partageant au moins un jeu de barres omnibus continues communes.

14. Procédé selon la revendication 13, dans lequel ledit procédé comprend le dépôt d'au moins trois barres omnibus (240A, 242, 240B) de telle sorte que l'espacement desdites au moins trois barres omnibus (240A, 242, 240B) forme au moins deux zones électrochromes (200A et 200B).

15. Procédé selon l'une quelconque des revendications 13 ou 14, dans lequel chacune desdites zones électrochromes (200A et 200B) n'est pas complètement isolée par rapport à l'autre.
